# EUROPEAN PATENT APPLICATION

(11) **EP 4 790 620 A1**
(43) Date of publication of application: **12.08.2026**
(21) Application number: 26154800.2
(22) Date of filing: 28.01.2026
(51) Int. Cl.: G06Q 10/10, G09B 5/06, G09B 19/00, G06N 3/02, G06N 20/00

(54) **METHOD FOR GENERATING TRAINING INSTRUCTIONS IN DIGITAL FORMAT AND SYSTEM THEREOF**

(30) Priority: 11.02.2025 IT 202500002589
(71) Applicant: Technogym S.p.A., 47521 Cesena (FC) (IT)
(72) Inventor: TORTOLINI, Sofia, I-47521 Cesena, Forli'-Cesena (IT); TANA, Marcello, I-47521 Cesena, Forli'-Cesena (IT); VALERIANI, Davide, I-47521 Cesena, Forli'-Cesena (IT); BARUZZI, Pietro, I-47521 Cesena, Forli'-Cesena (IT); MILANI, Luca, I-47521 Cesena, Forli'-Cesena (IT); GUIDI, Jarno, I-47521 Cesena, Forli'-Cesena (IT)
(74) Representative: Mozzi, Matteo

(57) **Abstract**

Method (200) for generating training instructions in digital format, comprising steps of: receiving (201), by a data processing unit, a digital content (C-D) of information representative of a workout set by a trainer; processing (202), by said data processing unit, by means of a processing master model based on artificial intelligence, the received digital content (C-D) to generate definitive training instructions in digital format corresponding to the information representative of the workout set by the trainer; providing (203), by said data processing unit, said definitive training instructions (I-W) in digital format to an electronic apparatus (A-E) to guide one or more users in performing the training.

## Description

### Field of the invention

The present invention relates to the field of fitness and, in particular, to a method for generating training instructions in digital format and a system thereof.

### Technological background of the invention

In the field of high-intensity group training activities, such as *CrossFit,* a new training programme or workout (WOD, Workout Of the Day) is created each day by the trainer/instructor, which must be presented to the participants, possibly explaining how the individual exercises are to be performed for those less experienced who do not yet know them.

The presentation step provides that the trainer shows the list of exercises, usually written on a whiteboard, possibly indicating the different steps of the workout and the different training stations.

The explanation step provides that the trainer shows how the type of exercise is to be performed by executing one or more repetitions.

In addition to the beginning of the workout, the trainer may have to show and explain the execution of an exercise again during the workout if, for example, a participant forgets how the exercise is to be performed or performs it incorrectly.

To do this, the trainer inevitably uses part of the class time during the initial step to explain the WOD, especially if there are people who are not experienced or who are performing that type of training for the first time.

To facilitate and accelerate the explanation step, trainers usually use digital applications on PCs or other electronic devices in which, before the class, they set the sequence of exercises for the different training stations provided for by the WOD.

At the start of the class, the workout in digital format is shown on a large screen with related videos and execution notes for the various exercises, for example the suggested load for men and women.

In this way, at the beginning of the class, it is much faster and clearer to understand which exercises to perform and, if during the workout a participant forgets an exercise or how it is to be performed, it is sufficient to look at the large screen where a video and notes can help.

However, these digital solutions are only effective for a small minority of trainers who are familiar with digital tools and who manage to include in their work process a preparation step on a PC or other electronic device in which they pre-set a digital workout.

To date, most trainers continue to use traditional whiteboards with the above-mentioned problems and with the limitation of a barrier to entry for new participants approaching this type of class.

In light of this, there is a strong need to have at disposal a method for generating training instructions in digital format that makes it possible to overcome such limitations as much as possible, thus allowing any trainer to create a digital workout in a simple, rapid and intuitive manner, maintaining an adequate level of clarity for immediate understanding and use by the group participants.

### Summary

The purpose of the present invention is to devise and provide a method for generating training instructions in digital format that allows at least partially overcoming the drawbacks mentioned above with reference to the known art, in particular that allows any trainer to create a digital workout in a simple, rapid and intuitive manner, maintaining an adequate level of clarity for the immediate understanding and use by the group participants.

Said purpose is achieved by means of a method according to claim 1.

Preferred embodiments of said method are defined in the dependent claims.

An embodiment of the present invention also relates to a system adapted to carry out said method.

### Brief description of the figures

Further features and advantages of the method and related system according to the invention will become apparent from the description below of preferred embodiments, given by way of illustration and not limitation, with reference to the accompanying drawings, in which:
- Figure 1 illustrates, by means of a block diagram, a system for generating training instructions in digital format, in accordance with the present invention;
- Figure 2 schematically illustrates, by means of a block diagram, a method for generating training instructions in digital format in accordance with the present invention;
- Figure 3 schematically illustrates definitive training instructions in digital format which can be generated by the method in accordance with the present invention, according to an embodiment;
- Figure 4a schematically illustrates definitive training instructions in digital format which can be generated by the method in accordance with the present invention, according to a further embodiment;
- Figure 4b schematically illustrates definitive training instructions in digital format which can be generated by the method in accordance with the present invention, according to a further embodiment;
- Figure 5a schematically illustrates definitive training instructions in digital format which can be generated by the method in accordance with the present invention, according to a further embodiment;
- Figure 5b schematically illustrates definitive training instructions in digital format which can be generated by the method in accordance with the present invention, according to a further embodiment;
- Figure 6 schematically illustrates a digital content processable by the method in accordance with the present invention, according to an embodiment;
- Figure 7 schematically illustrates a digital content processable by the method in accordance with the present invention, according to a further embodiment; and
- Figure 8 schematically illustrates a digital content processable by the method in accordance with the present invention, according to a further embodiment.

It is noted that in the aforementioned figures identical or similar elements are denoted by the same numerical and/or alphanumerical reference.

### Detailed description

With reference to the aforementioned figures, a system 100 for generating training instructions in digital format is now described, hereinafter simply referred to as generation system or merely system, in accordance with the present invention.

The system 100 comprises a data processing unit 1, for example a microprocessor or a microcontroller.

The system 100 further comprises a memory unit 2 operatively connected to the data processing unit 1.

The data processing unit 1 is configured to load and execute one or more program codes (previously stored in the memory unit 2) to perform steps of the method for generating training instructions in digital format, which is the subject of the present invention and described below.

The data processing unit 1 is preferably configured to execute a software application programmed through an Application Programming Interface (API).

The data processing unit 1 and the memory unit 2 may reside in an electronic processor, including a remote one (for example a cloud server), or in another electronic device such as, for example, a personal computer, a tablet, a smartphone, and so on.

The data processing unit 1 is configured to receive a digital content C-D of information representative of a workout set by a trainer.

By "workout" is meant a training programme comprising one or more exercises, preferably of different types, to be performed in sequence, preferably in accordance with set execution modalities (duration, number of repetitions, and so on).

In other words, the workout set by the trainer comprises at least one exercise.

Said workout may be, for example, a new training programme or workout (WOD, Workout Of the Day) created by the trainer for a high-intensity group training activity (for example, *CrossFit*)*.*

By "information representative of a workout set by a trainer" is meant information representative of each exercise provided by the trainer within the workout, such as information indicating the type of exercise (for example even just the name of the exercise) and the execution modality (for example in terms of duration, number of repetitions, and the like).

Embodiments of the digital content C-D of information representative of a workout set by a trainer will be provided below.

In accordance with the present invention, the data processing unit 1 is configured to process, by means of an artificial intelligence-based processing master model M-P, the received digital content C-D to generate definitive training instructions I-W in digital format corresponding to the information representative of the workout set by the trainer.

The "definitive training instructions I-W in digital format" correspond to the information representative of the workout set by the trainer, and therefore are information representative of each exercise provided by the trainer within the workout, such as information indicating the type of exercise (for example even just the name of the exercise) and the execution modality (for example in terms of duration, number of repetitions, and the like), but in digital format, that is, receivable and usable through an electronic apparatus.

The processing master model M-P based on artificial intelligence may reside in said data processing unit 1 or be remote with respect thereto, that is, it may reside in an additional processor or a remote cloud server.

The processing master model M-P based on artificial intelligence is, for example, a model based on generative artificial intelligence (for example, Gemini, Sonnet, GPT), a model based on artificial neural networks (ANNs), deep neural networks (DNNs), or convolutional neural networks (CNNs), and so on.

In greater detail, the processing master model M-P based on artificial intelligence is a model suitably trained to generate as output said definitive training instructions I-W in digital format, corresponding to the information representative of the workout set by the trainer, based on the input received corresponding to the received digital content C-D.

In this regard, the processing master model M-P based on artificial intelligence is suitably trained on the basis of a large amount of data so as to establish specific correspondences between the digital contents receivable as input, containing the information representative of the workout set by the trainer, and the definitive training instructions I-W in digital format which it is desired to receive as output.

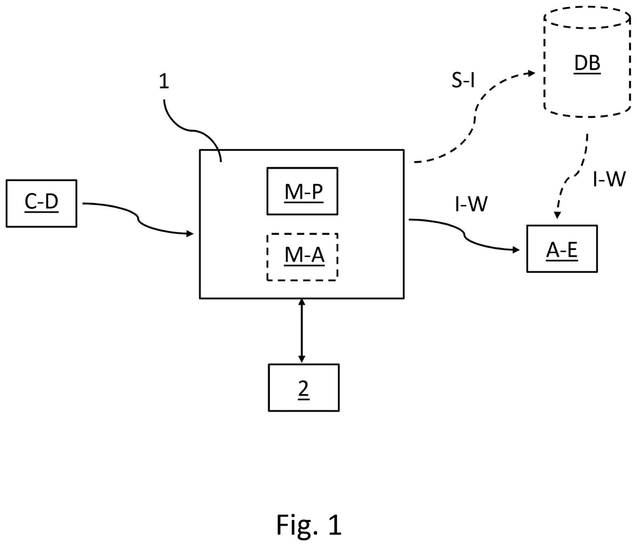

The data processing unit 1 is configured to provide said definitive training instructions I-W in digital format to an electronic apparatus A-E (schematically shown in figure 1) to guide one or more users in performing the training.

Examples of electronic apparatuses A-E will be described below in accordance with different embodiments.

According to an embodiment, the data processing unit 1 is configured to process the received digital content C-D based on parameter values/settings settable in the processing master model M-P based on artificial intelligence.

Examples of such parameter values/settings are:
- in the case of a generative artificial intelligence model, a temperature value of the generative artificial intelligence model, that is, a parameter that controls the randomness of the output which can be generated by the generative artificial intelligence model (a lower temperature value results in more predictable and conservative outputs, whereas a higher temperature value results in outputs with greater creativity and diversity). In this way, it is possible to achieve a proper balance between randomness and determinism in the output obtainable through the model;
- tokens (input or output), whose value represents the number of characters of the input or output of the model, for example four;
- a command prompt in which instructions are written for the model characterising the processing of the multimedia content C-D by the model (example of a prompt = *"Analyse the image of the fitness plan and extract the corresponding workout. Pay attention to names and exercises").*

It is noted that such parameters/settings are settable, for example, via an input interface of the processing master model M-P based on artificial intelligence.

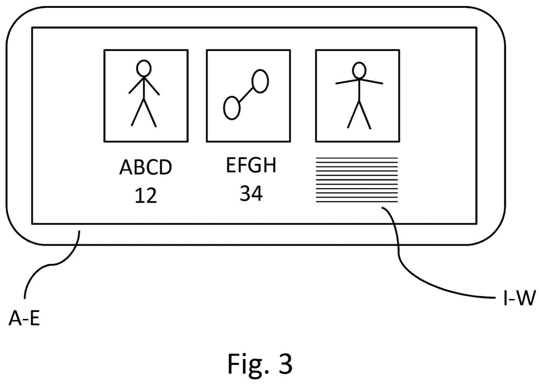

According to an embodiment, in combination with any of the foregoing, schematically shown in figure 3, the definitive training instructions I-W in digital format are provided to the electronic apparatus A-E in a digital format viewable on a display integrated into said electronic apparatus A-E or operatively connected to said electronic apparatus A-E.

In this case, the definitive training instructions I-W in digital format may comprise a textual part and/or images and/or a video part (with eventually associated a respective part audio) for each of the exercises provided in the workout set by the trainer.

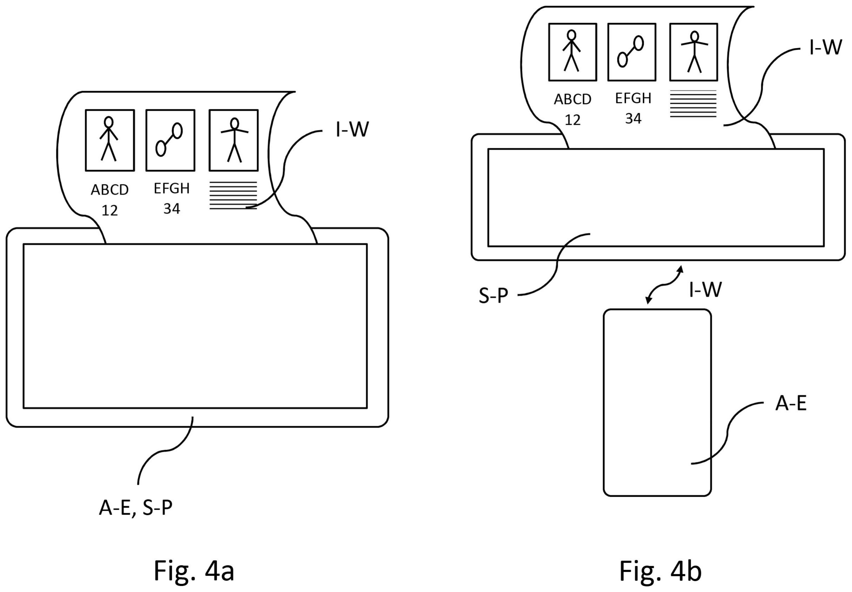

According to an embodiment, as an alternative to the previous one but in combination with any of the others, schematically shown in figures 4a and 4b, the definitive training instructions I-W in digital format are provided to the electronic apparatus A-E in a printable format by means of a printer S-P integrated into said electronic apparatus A-E (figure 4a) or by means of a printer S-P operatively connected to said electronic apparatus A-E (figure 4b).

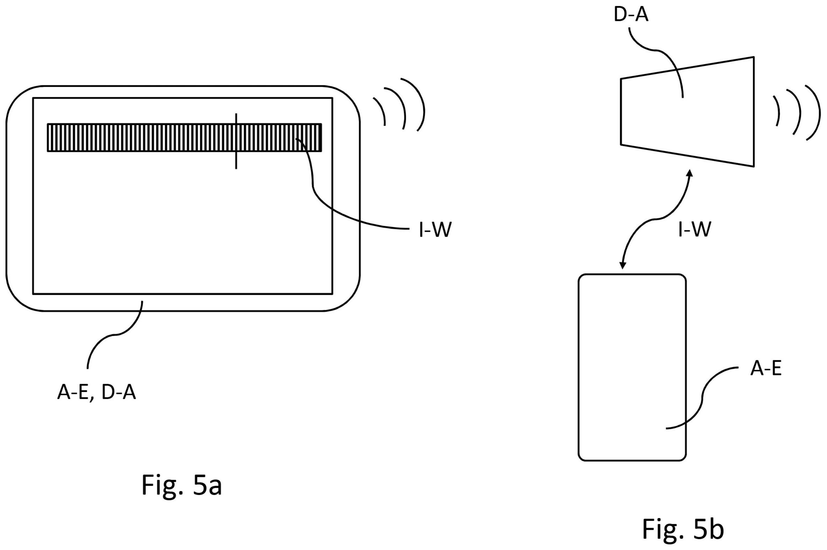

According to an embodiment, as an alternative to the two previous ones but in combination with any of the others, schematically shown in figures 5a and 5b, the definitive training instructions I-W in digital format are provided to the electronic apparatus A-E in an audio format reproducible by means of an audio speaker D-A integrated into the electronic apparatus (figure 5a) or by means of an audio speaker D-A operatively connected to the electronic apparatus A-E (figure 5b).

According to an embodiment, in combination with any of the foregoing, the data processing unit 1 is configured to convert the digital content C-D into a set digital format suitable for processing by means of said processing master model M-P based on artificial intelligence.

For example, the set digital format suitable for processing by means of said processing master model M-P based on artificial intelligence may be in one of the following types of formats:
- in the case of a digital image: JPEG, JPG, PNG format, and so on;
- in the case of a digital audio: MP3, MPGA, WAV format, and so on.

A further example of type of format that may be supported, in the specific case of use of an API, is the Byte format.

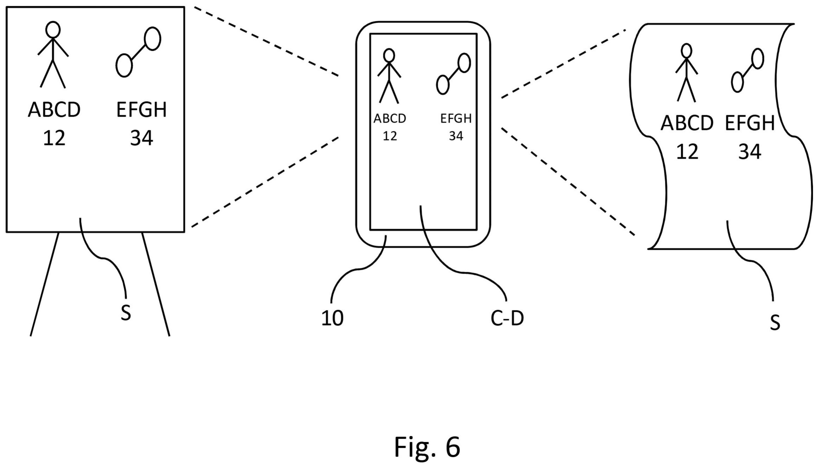

According to an embodiment, in combination with any of those previously described, shown in figure 6, the digital content C-D of information representative of the workout set by the trainer is a digital image acquired by an electronic device 10 of the trainer (for example a smartphone or a tablet) by taking a photograph of a medium S (for example, a sheet of paper or a whiteboard) onto which the information representative of the workout set by the trainer has been manually indicated by the trainer or by uploading a previously stored photograph.

In this second case, the trainer may have written the information representative of the workout set by the trainer on said medium S, taken the photograph with the electronic device 10 of the trainer, and stored it for example in a memory of the trainer's electronic device.

In both cases, digital image as a taken photograph or digital image as an uploaded photograph, said digital image is provided to the data processing unit 1, by sending or uploading via a dedicated web portal or user interface, for the execution of the operations assigned to the data processing unit 1 as described above.

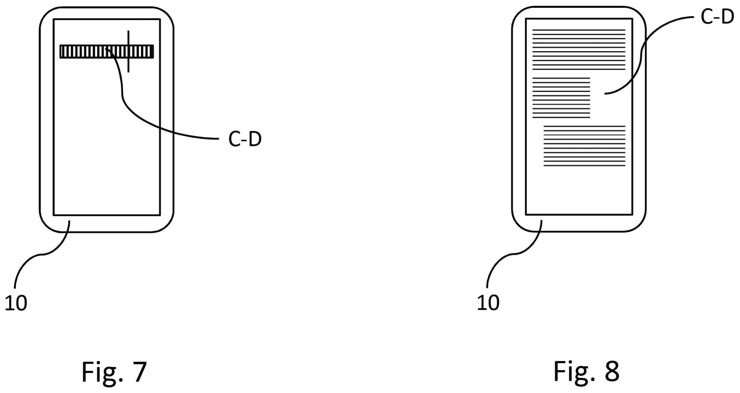

According to an embodiment, as an alternative to the previous one but in combination with any of the others previously described, shown for example in figure 7, the digital content C-D of information representative of the workout set by the trainer is an audio content recorded by the trainer by means of an electronic device 10 of the trainer (for example, a smartphone, a tablet, and so on) containing the information representative of the workout set by the trainer.

In this case, the audio content is provided to the data processing unit 1, by sending or uploading via a dedicated web portal or user interface, for the execution of the operations assigned to the data processing unit 1 as described above.

According to an embodiment, in combination with the foregoing, when in turn in combination with the embodiment providing for the conversion of the digital content into a set digital format suitable for processing by means of said processing master model M-P based on artificial intelligence, the conversion of the digital content into a set digital format suitable for processing by means of said processing master model M-P based on artificial intelligence is carried out by the data processing unit 1 by means of an additional artificial intelligence-based processing module M-A configured to convert the audio content recorded by the trainer into said set digital format suitable for processing by means of said processing master model M-P based on artificial intelligence.

According to a further embodiment, as an alternative to the foregoing which provide the digital content C-D as a digital image or as audio content, schematically shown in figure 8, the digital content C-D of information representative of the workout set by the trainer is a text written or received by the trainer by means of an electronic device of the trainer containing the information representative of the workout set by the trainer.

For example, said written text may be a text received via instant messaging (SMS, chat, and so on) or a text received via email or other method of written text communication.

In this case, the written text is provided to the data processing unit 1, by sending or uploading via a dedicated web portal or user interface, for the execution of the operations assigned to the data processing unit 1 as described above.

According to an embodiment, in combination with any of the foregoing, the data processing unit 1, in order to process said received digital content C-D to generate said definitive training instructions I-W in digital format corresponding to the information representative of the workout set by the trainer, is configured to process, by means of said processing master model M-P based on artificial intelligence, the multimedia content C-D to generate a respective digital query structure S-I comprising preliminary information corresponding to the information representative of the workout set by the trainer.

According to an embodiment, in combination with the foregoing and shown in figure 1 with dashed lines, the system 100 further comprises a reference database DB in which exercises and/or workouts in digital format are catalogued.

In fact, in one embodiment, exercises in digital format are catalogued in the reference database DB.

According to another embodiment, in combination with or as an alternative to the foregoing, workouts in digital format are catalogued in the reference database DB, that is, a sequence of specific exercises provided in a set workout.

The reference database DB is operatively connected to the data processing unit 1.

In this embodiment, the data processing unit 1, in order to process said received digital content C-D to generate said definitive training instructions I-W in digital format corresponding to the information representative of the workout set by the trainer, is configured to query the reference database DB on the basis of said digital query structure S-I generated by means of said processing master model M-P based on artificial intelligence to extract from said reference database DB said definitive training instructions I-W in digital format corresponding to the information representative of the workout set by the trainer.

According to an embodiment, in combination with the foregoing, the data processing unit 1 is configured to query the reference database DB for each exercise and/or workout provided by the preliminary information corresponding to the information representative of the workout set by the trainer included in the digital query structure S-I.

According to an embodiment, in combination with any of the foregoing in which the reference database DB is provided, the reference database DB is a vector database comprising set numerical vectors.

In the event that exercises in digital format are catalogued in the reference database DB, a numerical vector present within the reference database DB will correspond to a respective exercise.

For example:
- exercise name 1: [0.1, 0.2, 0.5];
- exercise name 2: [0.1, 0.3, 0.5];
- exercise name 3: [0.3, 0.5, 0.9].

In the event that, in combination with or as an alternative to the foregoing, workouts (exercise sequences) in digital format are catalogued in the reference database DB, a numerical vector present within the reference database DB will correspond to a respective workout.

For example:
- workout name 1: [0.2, 0.4, 0.5];
- workout name 2: [0.3, 0.4, 0.5];
- workout name 3: [0.1, 0.7, 0.9].

In this embodiment, the data processing unit 1, in order to process said received digital content C-D to generate said definitive training instructions I-W in digital format corresponding to the information representative of the workout set by the trainer, is configured to convert the preliminary information of each exercise and/or workout included in the preliminary information corresponding to the information representative of the workout set by the trainer included in the digital query structure S-I into numerical query vectors.

In this embodiment, the query of the reference database DB executable by the data processing unit 1 is a vector-type search.

According to an embodiment, in combination with the foregoing, the vector-type search is executable by the data processing unit 1 by iteratively comparing the set numerical vectors present in the reference database DB with the numerical query vectors to identify a set numerical vector present within the reference database DB having a set level of similarity with one of the numerical query vectors.

By "set level of similarity" is meant a similarity at numerical level.

Indeed, the numerical vectors, which may be considered as points in a multidimensional mathematical space, are evaluated among one another based on their mutual vector distance (mathematically calculated), the value of which quantifies how similar or different two numerical vectors are from each other, based on comparison with a set reference threshold value.

Two numerical vectors whose vector distance value is equal to or less than the set reference threshold value are considered similar. Otherwise, two numerical vectors whose vector distance value is greater than the set reference threshold value are considered different (not similar).

According to an embodiment, in combination with any of the foregoing in which the digital query structure S-I comprising preliminary information corresponding to the information representative of the workout set by the trainer is generated, the digital query structure S-I is in a set interchange format, for example the JSON format.

According to an embodiment, in combination with any of the foregoing, the data processing unit 1 is configured to store said definitive training instructions I-W in digital format in a respective memory unit, for example the memory unit 2.

In this way, it is advantageously possible for a trainer to retrieve said definitive training instructions I-W and have them available in the future without necessarily having to generate again the digital content C-D of information representative of a workout set by the trainer.

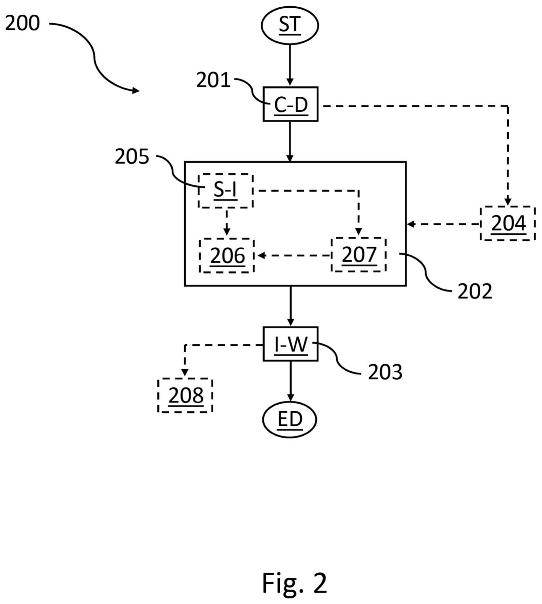

With reference now also to figure 2, a method 200 for generating training instructions in digital format is now described, hereinafter also simply referred to as generation method or simply method, in accordance with the present invention.

The method 200 comprises a symbolic step of starting ST.

The method 200 comprises a step of receiving 201, by a data processing unit 1, a digital content C-D of information representative of a workout set by a trainer.

The data processing unit 1 has already been described above.

The definitions and respective examples of workout and information representative of a workout set by a trainer have been previously provided.

It is reiterated that the workout set by the trainer comprises at least one exercise.

The method 200 comprises a step of processing 202, by said data processing unit 1, by means of a processing master model M-P based on artificial intelligence, the received digital content C-D to generate definitive training instructions I-W in digital format corresponding to the information representative of the workout set by the trainer.

The definitive training instructions I-W in digital format have been defined above.

The processing master model M-P based on artificial intelligence has been described above.

The method 200 further comprises a step of providing 203, performed by said data processing unit 1, said definitive training instructions I-W in digital format to an electronic apparatus A-E to guide one or more users in performing the training.

The method 200 then comprises a symbolic step of ending ED.

According to an embodiment, the step of processing 202 the received digital content C-D is performed by the data processing unit 1 based on parameter values/settings settable in the processing master model M-P based on artificial intelligence.

Examples of such parameter values/settings have been previously indicated.

It is reiterated that such parameters/settings are settable, for example, via an input interface of the processing master model M-P based on artificial intelligence.

According to an embodiment, in combination with any of the foregoing, said definitive training instructions I-W in digital format are provided to the electronic apparatus A-E in a video format viewable on a display integrated into said electronic apparatus A-E or operatively connected to said electronic apparatus A-E.

In this case, the definitive training instructions I-W in digital format may comprise a textual part and/or a video part (with eventually associated a respective part audio) for each of the exercises provided in the workout set by the trainer.

According to an embodiment, as an alternative to the foregoing but in combination with any of the others, said definitive training instructions I-W in digital format are provided to the electronic apparatus A-E in a printable format by means of a printer S-P integrated into said electronic apparatus A-E or by means of a printer S-P operatively connected to said electronic apparatus A-E.

According to an embodiment, as an alternative to the two foregoing but in combination with any of the others, said definitive training instructions I-W in digital format are provided to the electronic apparatus A-E in audio format reproducible by means of an audio speaker D-A integrated into the electronic apparatus A-E or by means of an audio speaker D-A operatively connected to the electronic apparatus A-E.

According to an embodiment, in combination with any of the foregoing, shown in figure 2 with dashed lines, the method 200 further comprises a step of converting 204, by said data processing unit 1, said digital content C-D into a set digital format suitable for processing by means of said processing master model M-P based on artificial intelligence.

Examples of said set digital format have been provided above.

According to an embodiment, in combination with any of those previously described, the digital content C-D of information representative of the workout set by the trainer is a digital image acquired by an electronic device of the trainer (for example a smartphone or a tablet) by taking a photograph of a medium S (for example, a sheet of paper or a whiteboard) onto which the information representative of the workout set by the trainer has been manually indicated by the trainer or by uploading a previously stored photograph.

In this second case, the trainer may have written the information representative of the workout set by the trainer on said medium S, taken the photograph with the trainer's electronic device, and stored it, for example, in a memory of the trainer's electronic device.

In both cases, digital image as taken photograph or digital image as uploaded photograph, said digital image is provided to the data processing unit 1, by sending or uploading via a dedicated web portal or user interface, for the execution of the operations assigned to the data processing unit 1 as described above.

According to an embodiment, as an alternative to the foregoing but in combination with any of the others previously described, the digital content C-D of information representative of the workout set by the trainer is an audio content recorded by the trainer by means of an electronic device of the trainer (for example, a smartphone, a tablet, and so on) containing the information representative of the workout set by the trainer.

In this case, the audio content is provided to the data processing unit 1, by sending or uploading via a dedicated web portal or user interface, for the execution of the operations assigned to the data processing unit 1 as described above.

According to an embodiment, in combination with the foregoing, when in turn in combination with the embodiment providing for the conversion of the digital content into a set digital format suitable for processing by means of said processing master model M-P based on artificial intelligence, shown with dashed lines in figure 2, the step of converting 204 said digital content into a set digital format suitable for processing by means of said processing master model M-P based on artificial intelligence is performed by means of an additional artificial intelligence-based processing module M-A configured to convert the audio content recorded by the trainer into said set digital format suitable for processing by means of said processing master model M-P based on artificial intelligence.

According to a further embodiment, as an alternative to the foregoing which provide the digital content C-D as a digital image or as audio content, the digital content C-D of information representative of the workout set by the trainer is a text written or received by the trainer by means of an electronic device of the trainer containing the information representative of the workout set by the trainer.

For example, said written text may be a text received via instant messaging (SMS, chat, and so on) or a text received via email or another method of written text communication.

In this case, the written text is provided to the data processing unit 1, by sending or uploading via a dedicated web portal or user interface, for the execution of the operations assigned to the data processing unit 1 as described above.

According to an embodiment, in combination with any of the foregoing and shown in figure 2 with dashed lines, the step of processing 202 said received digital content C-D to generate definitive training instructions I-W in digital format corresponding to the information representative of the workout set by the trainer comprises a step of processing 205, by means of said processing master model M-P based on artificial intelligence, the multimedia content C-D to generate a respective digital query structure S-I comprising preliminary information corresponding to the information representative of the workout set by the trainer.

According to an embodiment, in combination with the foregoing, the step of processing 202 said received digital content C-D to generate definitive training instructions I-W in digital format corresponding to the information representative of the workout set by the trainer further comprises a step of querying 206 a reference database DB in which exercises and/or workouts in digital format are catalogued, operatively connected to the data processing unit 1, on the basis of said digital query structure S-I generated by means of said processing master model M-P based on artificial intelligence to extract from said reference database DB said definitive training instructions I-W in digital format corresponding to the information representative of the workout set by the trainer.

As previously stated, in one embodiment, exercises in digital format are catalogued within the reference database DB.

According to another embodiment, in combination with or as an alternative to the foregoing, workouts in digital format are catalogued within the reference database DB, that is, a sequence of specific exercises provided in a set workout.

According to an embodiment, in combination with the foregoing, the step of querying 206 said reference database DB is performed for each exercise and/or workout provided by the preliminary information corresponding to the information representative of the workout set by the trainer included in the digital query structure S-I.

According to an embodiment, in combination with any of the foregoing in which the reference database DB is provided, the reference database DB is a vector database comprising set numerical vectors.

In the event that, in combination with or as an alternative to the foregoing, workouts (exercise sequences) in digital format are catalogued in the reference database DB, a numerical vector present within the reference database DB will correspond to a respective workout.

For example:
- exercise name 1: [0.1, 0.2, 0.5];
- exercise name 2: [0.1, 0.3, 0.5];
- exercise name 3: [0.3, 0.5, 0.9].

In the event that, in combination with or as an alternative to the foregoing, workouts (exercise sequences) in digital format are catalogued in the reference database DB, a numerical vector present within the reference database DB will correspond to a respective workout.

For example:
- workout name 1: [0.2, 0.4, 0.5];
- workout name 2: [0.3, 0.4, 0.5];
- workout name 3: [0.1, 0.7, 0.9].

In this embodiment, shown with dashed lines in figure 2, the step of processing 202 said received digital content C-D to generate definitive training instructions I-W in digital format corresponding to the information representative of the workout set by the trainer comprises a step of converting 207 the preliminary information of each exercise and/or workout included in the preliminary information corresponding to the information representative of the workout set by the trainer included in the digital query structure S-I into numerical query vectors.

In this embodiment, the querying step 206 of the reference database DB is a vector-type search.

According to an embodiment, in combination with the foregoing, the vector-type search is performed by the data processing unit 1 by iteratively comparing the set numerical vectors present in the reference database DB with the numerical query vectors to identify a set numerical vector present within the reference database DB having a set level of similarity with one of the numerical query vectors.

By "set level of similarity" is meant a similarity at numerical level.

Indeed, the numerical vectors, which may be considered as points in a multidimensional mathematical space, are evaluated among one another based on their mutual vector distance (mathematically calculated), the value of which quantifies how similar or different two numerical vectors are from each other, based on comparison with a set reference threshold value.

Two numerical vectors whose vector distance value is equal to or less than the set reference threshold value are considered similar. Otherwise, two numerical vectors whose vector distance value is greater than the set reference threshold value are considered different (not similar).

According to an embodiment, in combination with any of the foregoing in which the digital query structure S-I comprising preliminary information corresponding to the information representative of the workout set by the trainer is generated, the digital query structure S-I is in a set interchange format, for example the JSON format.

According to an embodiment, in combination with any of the foregoing, shown with dashed lines in figure 2, the method 200 further comprises a step of storing 208, by the data processing unit 1, said definitive training instructions I-W in digital format in a respective memory unit, for example the memory unit 2.

In this way, it is advantageously possible for a trainer to retrieve said definitive training instructions I-W and have them available in the future without necessarily having to generate again the digital content C-D of information representative of a workout set by the trainer.

With reference to the aforementioned figures, an example of implementation of the method for generating training instructions in digital format according to the present invention is now described.

The trainer manually indicates on a medium S, for example a whiteboard, information representative of the workout set by the trainer.

The trainer, through his or her own electronic device (smartphone), takes a photograph of the whiteboard and sends said digital content C-D to a data processing unit 1, for example of a remote cloud service that provides precisely the generation of training instructions in digital format.

The data processing unit 1 receives the digital content C-D of information representative of a workout set by a trainer.

The data processing unit 1, by means of a processing master model M-P based on artificial intelligence, processes the received digital content C-D to generate definitive training instructions I-W in digital format corresponding to the information representative of the workout set by the trainer.

In greater detail, the data processing unit 1, by means of said processing master model M-P based on artificial intelligence, processes the multimedia content C-D to generate a respective digital query structure S-I comprising preliminary information corresponding to the information representative of the workout set by the trainer.

Subsequently, the data processing unit 1 queries a reference database DB in which exercises and/or workouts in digital format are catalogued, operatively connected to the data processing unit 1, on the basis of said digital query structure S-I generated by means of said processing master model M-P based on artificial intelligence, to extract from said reference database DB the definitive training instructions I-W in digital format corresponding to the information representative of the workout set by the trainer.

The querying of the reference database DB is performed for each exercise provided by the preliminary information corresponding to the information representative of the workout set by the trainer included in the digital query structure S-I.

Since the reference database DB is a vector database comprising set numerical vectors, the data processing unit 1 converts the preliminary information corresponding to the information representative of the workout set by the trainer included in the digital query structure S-I into numerical query vectors.

In this case, therefore, the querying of the reference database DB is a vector-type search and is performed by the data processing unit 1 by iteratively comparing the set numerical vectors present in the reference database DB with the numerical query vectors to identify a set numerical vector present within the reference database DB having a set level of similarity with one of the numerical query vectors, that is, having a vector distance value from one of the numerical query vectors equal to or less than a set reference threshold value.

For example, in the event that the numerical query vector is [0.1, 0.3, 0.5], conversion of the indication "exercise = PUSH-UP" set by the trainer, and the reference database DB contains a first numerical vector [0.1, 0.3, 0.5], conversion of "exercise 1 = PUSH-UP", and a second numerical vector [0.1, 0.2, 0.3], conversion of "exercise 2 = PUSH-DOWN", following the querying of the reference database DB, the vector-type search will return "exercise 1 = PUSH-UP" as a result, since the expected similarity has occurred (the query vector is even exactly equal to that numerical vector present in the reference database DB, and thus the calculated vector distance is null).

At this point, the data processing unit 1 provides said definitive training instructions I-W in digital format to an electronic apparatus A-E to guide one or more users in performing the training.

The definitive training instructions I-W in digital format are provided to the electronic apparatus A-E in a digital format viewable on a display integrated into said electronic apparatus A-E.

The electronic apparatus A-E displays on the integrated display the received training instructions I-W in digital format, and the one or more users may thus be guided in the training.

Said definitive training instructions I-W in digital format comprise a textual part and/or images and/or a video part (with eventually associated a respective part audio) for each of the exercises provided in the workout set by the trainer in such a way that the one or more users understand which exercise to perform, how to perform it correctly, and for how long or for how many repetitions.

As can be seen, the purpose of the present invention is fully achieved.

Indeed, the method and the related system according to the present invention allow the trainer/instructor to continue working with the current tools (whiteboard) and modalities (without preparing a digital workout before the class).

In addition, thanks to the method and the related system which are the subject of the present invention, the creation of the digital workout is extremely fast.

Furthermore, the adoption of a digital working mode, which allows the trainer/instructor to use the digital workout to simplify the explanation step both at the beginning of the workout and during the execution of the class, is quite simple and intuitive, even for those who are not very familiar with technology.

Finally in the case that the definitive training instructions in digital format are stored in a respective memory unit, it is advantageously possible for a trainer to retrieve such definitive instructions and have them available in the future without necessarily having to generate again the digital content of information representative of a workout set by the trainer.

To the embodiments of the method and the related system described above, a person skilled in the art, in order to meet contingent needs, may make modifications, adaptations, and replacements of elements with others that are functionally equivalent, without departing from the scope of the following claims. Each of the features described as belonging to a possible embodiment may be implemented independently of the other embodiments described.

## Claims

1. A method (200) for generating training instructions in digital format, comprising steps of:
- receiving (201), by a data processing unit (1), a digital content (C-D) of information representative of a workout set by a trainer;
- processing (202), by said data processing unit (1), by means of an artificial intelligence-based processing master model (M-P), the received digital content (C-D) to generate definitive training instructions (I-W) in digital format corresponding to the information representative of the workout set by the trainer;
- providing (203), by said data processing unit (1), said definitive training instructions (I-W) in digital format to an electronic apparatus (A-E) to guide one or more users in performing the training.

2. The method (200) according to claim 1, wherein the step of processing (202) the received digital content (C-D) is performed by the data processing unit (1) based on parameter values/settings settable in the artificial intelligence-based processing master model (M-P).

3. The method (200) according to any one of the preceding claims, wherein said definitive training instructions (I-W) in digital format are provided to the electronic apparatus (A-E) in a video format viewable on a display integrated into said electronic apparatus (A-E) or operatively connected to said electronic apparatus (A-E).

4. The method (200) according to any one of the preceding claims 1 or 2, wherein said definitive training instructions (I-W) in digital format are provided to the electronic apparatus (A-E) in a printable format by means of a printer (S-P) integrated into said electronic apparatus (A-E) or by means of a printer (S-P) operatively connected to said electronic apparatus (A-E).

5. The method (200) according to any one of the preceding claims 1 or 2, wherein said definitive training instructions (I-W) in digital format are provided to the electronic apparatus (A-E) in audio format reproducible by means of a speaker (D-A) integrated into the electronic apparatus (A-E) or by means of a speaker (D-A) operatively connected to the electronic apparatus (A-E).

6. The method (200) according to any one of the preceding claims, comprising a step of converting (204), by said data processing unit (1), said digital content into a set digital format suitable for processing by means of said artificial intelligence-based processing master model (M-P).

7. The method (200) according to any one of the preceding claims, wherein said digital content (C-D) of information representative of the workout set by the trainer is a digital image acquired by an electronic device of the trainer by taking a photograph of a medium (S) onto which the information representative of the workout set by the trainer have been indicated manually by the trainer or by uploading a previously stored photograph.

8. The method (200) according to any one of the preceding claims 1 to 6, wherein said digital content (C-D) of information representative of the workout set by the trainer is an audio content recorded by the trainer by means of an electronic device of the trainer containing the information representative of the workout set by the trainer.

9. The method according to claim 8, when dependent on claim 6, wherein the step of converting (204) said digital content into a set digital format suitable for processing by means of said artificial intelligence-based processing master model (M-P) is performed by an additional artificial intelligence-based module configured to convert the audio content recorded by the trainer into said set digital format suitable for processing by means of said artificial intelligence-based processing master model (M-P).

10. The method (200) according to any one of the preceding claims 1 to 6, wherein said digital content (C-D) of information representative of the workout set by the trainer is a text written to or received by the trainer by means of an electronic device of the trainer containing the representative workout information set by the trainer.

11. The method (200) according to any one of the preceding claims, wherein said step of processing (202) said received digital content (C-D) to generate definitive training instructions (I-W) in digital format corresponding to the information representative of the workout set by the trainer comprises a step of processing (205), by means of said artificial intelligence-based processing master model (M-P), the multimedia content (C-D) to generate a respective digital query structure (S-I) comprising preliminary information corresponding to the information representative of the workout set by the trainer.

12. The method (200) according to claim 11, wherein the step of processing (200) said received digital content (C-D) to generate definitive training instructions in digital format corresponding to the information representative of the workout set by the trainer further comprises a step of querying (206) a reference database (DB) in which exercises in digital format are catalogued, operatively connected to the data processing unit (1), based on said digital query structure (S-I) generated by means of said artificial intelligence-based processing master model (M-P) to extract from said reference database (DB) said definitive training instructions (I-W) in digital format corresponding to the information representative of the workout set by the trainer.

13. The method (200) according to claim 12, wherein the step of querying (206) said reference database (DB) is performed for each exercise and/or workout provided by the preliminary information corresponding to the information representative of the workout set by the trainer included in the digital query structure (S-I).

14. The method (200) according to any one of the preceding claims 12 or 13, wherein the reference database (DB) is a vector database comprising set numerical vectors, the step of processing (202) said received digital content (C-D) to generate definitive training instructions (I-W) in digital format corresponding to the information representative of the workout set by the trainer comprising a step of converting (207) the preliminary information of each exercise and/or workout included in the preliminary information corresponding to the information representative of the workout set by the trainer included in the digital query structure (S-I) into numerical query vectors, the step of querying (206) the reference database (DB) being a vector type search.

15. The method (200) according to claim 14, wherein the vector type search is iteratively performed by comparing the set numerical vectors present in the reference database (DB) with the numerical query vectors to identify a set numerical vector present within the reference database (DB) having a set level of similarity with one of the numerical query vectors.

16. A system (100) for generating training instructions in digital format, comprising a data processing unit (1) configured to perform a method for generating training instructions in digital format according to any one of the preceding claims 1 to 11.

17. The system (100) according to claim 16, comprising a reference database (DB) in which workouts in digital format are catalogued, operatively connected to the data processing unit (1), the data processing unit (1) being configured to perform a method for generating training instructions in digital format according to any one of the preceding claims 12 to 15.
